# EUROPÄISCHE PATENTSCHRIFT

(11) **EP 2 450 266 B1**
(45) Veröffentlichungstag und Bekanntmachung des Hinweises auf die Patenterteilung: **17.06.2015**
(21) Anmeldenummer: 11185750.4
(22) Anmeldetag: 19.10.2011
(51) Int. Cl.: B62D 15/02

(54) **Steuereinheit mit einem Lenkwinkelsensor für eine Servolenkung eines Kraftfahrzeugs und Verfahren**
Control unit with a steering angle sensor for a power steering system of a motor vehicle and method
Unité de commande avec un capteur d'angle de direction pour une direction assistée d'un véhicule automobile et procédé

(30) Priorität: 05.11.2010 DE 102010043449
(43) Veröffentlichungstag der Anmeldung: 09.05.2012
(73) Patentinhaber: Robert Bosch GmbH, 70442 Stuttgart (DE)
(72) Erfinder: Koehler, Dietmar, 72649 Wolfschlugen (DE); Hiry, Pascal, 71665 Vaihingen/Enz (DE)

(56) Entgegenhaltungen:
- EP-A2- 1 225 419
- WO-A1-2010/069974
- DE-A1-102006 046 834

## Beschreibung

### Stand der Technik

Die Erfindung betrifft einen Lenkwinkelsensor für eine elektrisch getriebene Servolenkung eines Kraftfahrzeugs. Der Lenkwinkelsensor weist einen Eingang für ein Rotorpositionssignal auf. Das Rotorpositionssignal repräsentiert eine Rotorposition eines Rotors eines Elektromotors der Servolenkung. Der Lenkwinkelsensor ist ausgebildet, einen Lenkwinkel eines mit der Servolenkung verbundenen Lenkrads in Abhängigkeit des Rotorpositionssignals, insbesondere durch Erfassen einer Rotordrehung des Rotors zu ermitteln.

Eine Ermittlung des Lenkwinkelsignals kann bei bekanntem Übersetzungsverhältnis zwischen einem mit der Servolenkung verbundenen Lenkrad in Abhängigkeit der Rotordrehung beispielsweise mittels eines Linearfaktors durch den Lenkwinkelsensor erfolgen. Bei einem Übersetzungsverhältnis zwischen der Lenkraddrehung und der Rotordrehung von 1 : 20 entspricht eine Lenkraddrehung 20 Rotordrehungen. Die Ermittlung des Lenkwinkels in Abhängigkeit der Rotordrehung verbraucht elektrische Energie, die von einer Verarbeitungseinheit des Lenkwinkelsensors, beispielsweise einem Mikrocontroller verbraucht wird. Um einen sicheren Betrieb der Servolenkung zu gewährleisten, soll auch im Falle einer abgeklemmten Starterbatterie eine Stellung, insbesondere eine Nullstellung des Lenkrades zur Verfügung stehen. Dazu müssen dann gesonderte Energiespeicher bereitstehen, um die Verarbeitungseinheit mit Strom zum Ermitteln des Lenkwinkels zu versorgen.

Aus der DE 10 2006 046 834 A1 ist ein Steuergerät in einem Lenkungssystem eines Fahrzeugs bekannt, wobei eine Ausgangs-Nulllage einer Lenkwelle des Fahrzeugs in Abhängigkeit einer Fahrzeugzustandsgröße ermittelt wird, wobei die Fahrzeugzustandsgröße keine Lenkwinkelgröße ist.

Aus der EP 1 225 419 A2 ist ein Lenkwinkelsensor bekannt, bei dem ein Betriebsmodus mit kleinerer Stromaufnahme bei abgeschalteter Zündung eines Fahrzeugs im Vergleich zu aktivierter Zündung des Fahrzeugs vorgesehen ist und dazu ein Magnetresonanz-Sensor des Lenkwinkelsensors abgeschaltet und eine Taktrate zum Betreiben des Lenkwinkelsensors geändert werden kann.

Aus der WO2010/069974 ist ein Fahrzeug mit einem Lenkwinkelsensor bekannt, bei dem eine Erfassungsfrequenz einer Lenkwinkelpositionserfassung durch den Lenkwinkelsensor in Abhängigkeit eines Betriebszustandes des Fahrzeugs verkleinert werden kann, um so bei abgestelltem Fahrzeug eine Batterieladung einer Fahrzeugbatterie zu schonen.

Die zugrundeliegende objektive technische Aufgabe ist es daher, eine Steuereinheit mit einem Lenkwinkelsensor anzugeben, welche energiesparend und ausfallsicher betrieben werden kann.

Diese Aufgabe wird durch die Steuereinheit mit einem Lenkwinkelsensor gemäß dem Anspruch 1 und das Verfahren gemäß dem Anspruch 4 gelöst.

### Offenbarung der Erfindung

Erfindungsgemäß ist der Lenkwinkelsensor ausgebildet, den Lenkwinkel in einem Betriebsmodus, insbesondere beim Betrieb des Kraftfahrzeugs, kontinuierlich zu ermitteln. Weiter bevorzugt ist der Lenkwinkelsensor ausgebildet, in einem Bereitschaftsmodus, insbesondere beim Stillstand des Kraftfahrzeugs, den Lenkwinkel in vorbestimmten Zeitabständen zu ermitteln. Bevorzugt ist der Lenkwinkelsensor ausgebildet, ein den ermittelten Lenkwinkel repräsentierendes Lenkwinkelsignal zu erzeugen und ausgangsseitig auszugeben.

Die vorbestimmten Zeitabstände entsprechen einer Pulsfolgefrequenz, mit der das Rotorpositionssignal abgetastet wird, weiter bevorzugt einer Pulsfolgefrequenz, mit der in Abhängigkeit des Rotorpositionssignals der Lenkwinkel vom Lenkwinkelsensor ermittelt wird.

Ein kontinuierliches Ermitteln bedeutet, dass im Falle einer analogen Verarbeitungseinheit als ermittelnder Bestandteil des Lenkwinkelsensors ununterbrochen ermittelt wird und im Falle einer digitalen Verarbeitungseinheit, insbesondere einem Mikroprozessor oder Mikrocontroller die Verarbeitungseinheit bevorzugt mit ihrer vollen Verarbeitungsgeschwindigkeit, insbesondere Taktfrequenz arbeitet. Bevorzugt sind dann die vorbestimmten Zeitabstände im Bereitschaftsmodus größer als die vorbestimmten Zeitabstände im Betriebsmodus, so dass eine die Frequenz des Ermittelns im Bereitschaftsmodus kleiner ist als die Frequenz im Betriebsmodus.

Durch das Herabsetzen der Erfassungsfrequenz mit der das Rotorpositionssignal erfasst wird oder der Frequenz mit der aus dem Rotorpositionssignal der Lenkwinkel errechnet wird, kann vorteilhaft Energie eingespart werden, insoweit zum Lenkwinkelerfassen, insbesondere Lenkwinkelberechnen von dem Lenkwinkelsensor, insbesondere einer Verarbeitungseinheit des Lenkwinkelsensors, elektrische Energie verbraucht wird. Dadurch kann vorteilhaft während eines Stillstands des Fahrzeugs weniger Energie verbraucht werden, als während eines Betriebs des Kraftfahrzeugs. Dadurch wird die Starterbatterie des Kraftfahrzeugs während eines Stillstands des Kraftfahrzeugs nicht so schnell entladen.

Bevorzugt ist der Lenkwinkelsensor ausgebildet, den Lenkwinkel in einem Betriebsmodus mit im Vergleich zum vorgenannten Betriebsmodus mit reduziertem Energieverbrauch - insbesondere beim kurzzeitigen Halten des Kraftfahrzeugs, beispielsweise an einer Ampel bei abgestelltem Motor - in vorbestimmten Zeitabständen zu ermitteln, und in einem Bereitschaftsmodus, insbesondere beim Stillstand des Kraftfahrzeugs, in vorbestimmten Zeitabständen zu ermitteln, die größer sind als die vorbestimmten Zeitabstände im Betriebsmodus mit reduziertem Energieverbrauch. Dadurch sind vorteilhaft drei Betriebsmodi gebildet, nämlich der vorab erwähnte Betriebsmodus mit kontinuierlicher Lenkwinkelermittlung, der Betriebsmodus mit reduziertem Energieverbrauch und der Bereitschaftsmodus, in dem noch weniger Energie verbraucht wird als im Betriebsmodus mit reduziertem Energieverbrauch.

Denkbar sind weitere Abstufungen des Energieverbrauchs, so kann der Lenkwinkelsensor ausgebildet sein, in wenigstens zwei oder in mindestens drei zueinander verschiedenen Modi mit zueinander verschiedenen Zeitabständen der Lenkwinkelermittlung zu arbeiten.

In einer vorteilhaften Ausführungsform weist der Lenkwinkelsensor einen Spannungssensor zum Erfassen der Versorgungsspannung des Lenkwinkelsensors auf. Der Lenkwinkelsensor ist ausgebildet, in Abhängigkeit eines Ausgangssignals des Spannungssensors, insbesondere bei einem Absinken der Versorgungsspannung, in den Betriebsmodus mit reduziertem Energieverbrauch zu wechseln. Dadurch braucht vorteilhaft eine Kapazität eines Stützkondensators oder eines Stützakkumulators für den Lenkwinkelsensor nicht so groß sein. Weiter vorteilhaft kann beispielsweise beim Zusammenbrechen der Versorgungsspannung, insbesondere während eines Startens des Fahrzeugs mittels eines elektrischen Anlassers, die Energieversorgung des Lenkwinkelsensors mittels des Stützkondensators sichergestellt werden.

In einer bevorzugten Ausführungsform ist der Lenkwinkelsensor ausgebildet, in Abhängigkeit eines im Bereitschaftsmodus erfassten Rotorbewegens vom Bereitschaftsmodus in den Betriebsmodus zu wechseln. So kann vorteilhaft eine Erfassungsgenauigkeit eines Lenkwinkelerfassens während des Bereitschaftsmodus reduziert sein, sodass wenn ein Rotorbewegen erkannt wird, nach dem Wechseln in den Bereitschaftsmodus die Erfassungsfrequenz wieder größer ist als im Bereitschaftsmodus.

In einer bevorzugten Ausführungsform weist der Lenkwinkelsensor einen Speicher für einen Lenkwinkeldatensatz auf, wobei der Lenkwinkeldatensatz den zuletzt ermittelten Lenkwinkel der Lenkung repräsentiert. So kann vorteilhaft eine Nulllage der Servolenkung während eines Stromausfalls, beziehungsweise eines kurzzeitigen Zusammenbrechens der Versorgungsspannung des Lenkwinkelsensors ermittelt werden.

Die Erfindung betrifft auch eine Steuereinheit für eine Servolenkung, mit einem Lenkwinkelsensor der vorbeschriebenen Art, und eine Servolenkung mit der Steuereinheit. Die Steuereinheit weist einen Ausgang zum Verbinden mit einem Elektromotor der Servolenkung, und einen Eingang zum Empfangen eines Rotorpositionssignals auf. Die Steuereinheit ist ausgebildet, einen Stator des Elektromotors zum Erzeugen eines magnetischen Drehfeldes in Abhängigkeit des Rotorpositionssignals zu bestromen.

In einer bevorzugten Ausführungsform weist die Steuereinheit einen Spannungswandler auf, insbesondere einen Hochsetzsteller oder eine Ladungspumpe. Der Spannungswandler ist ausgebildet, die Versorgungsspannung zum Betreiben des Lenkwinkelsensors im Betriebsmodus im Vergleich zum Bereitschaftsmodus anzuheben. So kann vorteilhaft die Versorgungsspannung zum Betreiben des Lenkwinkelsensors bei einem Zusammenbrechen der Spannung, beispielsweise bei einem Starten des Fahrzeugs, noch ausreichen, um den Lenkwinkelsensor weiter zu betreiben. Beispielsweise beträgt die Versorgungsspannung im Betriebsmodus 12 Volt, und im Bereitschaftsmodus 5 Volt. Die notwendige Spannung zum Betreiben des Lenkwinkelsensors, insbesondere der Verarbeitungseinheit des Lenkwinkelsensors, beträgt beispielsweise 5 Volt. So wird der Lenkwinkelsensor im Bereitschaftsmodus mit der hinreichenden Betriebsspannung betrieben, um noch zu arbeiten. Im Betriebsmodus wird der Lenkwinkelsensor mit einer Versorgungsspannung betrieben, welche größer ist als die hinreichende Spannung. So steht noch eine Spannungsreserve zur Verfügung, welche im Falle eines Zusammenbrechens der Versorgungsspannung nicht dazu führt, dass die hinreichende Versorgungsspannung zum Betreiben des Lenkwinkelsensors unterschritten wird.

Die Erfindung betrifft auch ein Verfahren zum Betreiben einer elektrisch getriebenen Lenkhilfe, insbesondere Servolenkung für ein Kraftfahrzeug. Die Lenkhilfe weist einen Elektromotor mit einem Rotor auf.

Bei dem Verfahren wird ein Lenkwinkelsignal in Anhängigkeit eines eine Rotorposition des Rotors repräsentierenden Rotorpositionssignals erzeugt. Das Lenkwinkelsignal wird in einem Betriebsmodus, insbesondere während eines Betriebs des Kraftfahrzeugs, kontinuierlich oder gepulst während der Pulsdauer eines Betriebspulses einer zeitlichen Folge von Betriebspulsen erzeugt, und in einem Bereitschaftsmodus, insbesondere beim Stillstand des Kraftfahrzeugs, gepulst während der Pulsdauer eines Bereitschaftspulses einer zeitlichen Folge von Bereitschaftspulsen erzeugt.

Bevorzugt ist im Falle eines gepulsten Betriebs im Betriebsmodus eine Betriebsdauer als Summe der Betriebspulse in einem Zeitintervall größer als eine Betriebsdauer im Bereitschaftsmodus als Summe der Bereitschaftspulse in dem Zeitintervall. Dadurch wird im Bereitschaftsmodus weniger Energie verbraucht als im Betriebsmodus.

Denkbar ist eine kleinere Pulsfolgefrequenz der Bereitschaftspulse im Bereitschaftsmodus als die Pulsfolgefrequenz der Betriebspulse im Betriebsmodus, und/oder eine Pulsdauer der Betriebspulse ist größer als eine Pulsdauer der Bereitschaftspulse.

Bevorzugt wird bei dem Verfahren eine Versorgungsspannung eines das Lenkwinkelsignal ermittelnden Lenkwinkelsensors erfasst und in Abhängigkeit der Versorgungsspannung, insbesondere bei einem Absinken der Versorgungsspannung vom Betriebsmodus in einen Betriebsmodus mit reduziertem Energieverbrauch des Lenkwinkelsensors gewechselt, bei dem das Lenkwinkelsignal gepulst während der Pulsdauer wenigstens eines Betriebspulses einer zeitlichen Folge von Betriebspulsen erzeugt wird, wobei eine Pulsfolgefrequenz der Betriebspulse größer ist als eine Pulsfolgefrequenz der Bereitschaftspulse.

In einer bevorzugten Ausführungsform des Verfahrens wird in Abhängigkeit eines im Bereitschaftsmodus erfassten Rotorbewegens vom Bereitschaftsmodus in den Betriebsmodus gewechselt.

Bei dem Verfahren wird - bevorzugt mittels eines Spannungswandlers, insbesondere eines Hochsetzstellers oder einer Ladungspumpe - die Versorgungsspannung zum Betreiben des Lenkwinkelsensors im Betriebsmodus im Vergleich zum Bereitschaftsmodus angehoben.

Die Erfindung wird nun im Folgenden anhand von Figuren und weiteren Ausführungsbeispielen beschrieben. Weitere vorteilhafte Ausführungsvarianten ergeben sich aus den abhängigen Ansprüchen sowie aus den in den Figuren beschriebenen Merkmalen.
Figur 1 zeigt ein Ausführungsbeispiel für eine Lenkvorrichtung für ein Kraftfahrzeug mit einem Lenkwinkelsensor;
Figur 2 zeigt ein Diagramm in dem Betriebszustände des in Figur 1 dargestellten Lenkwinkelsensors anhand von Kurven veranschaulicht sind.

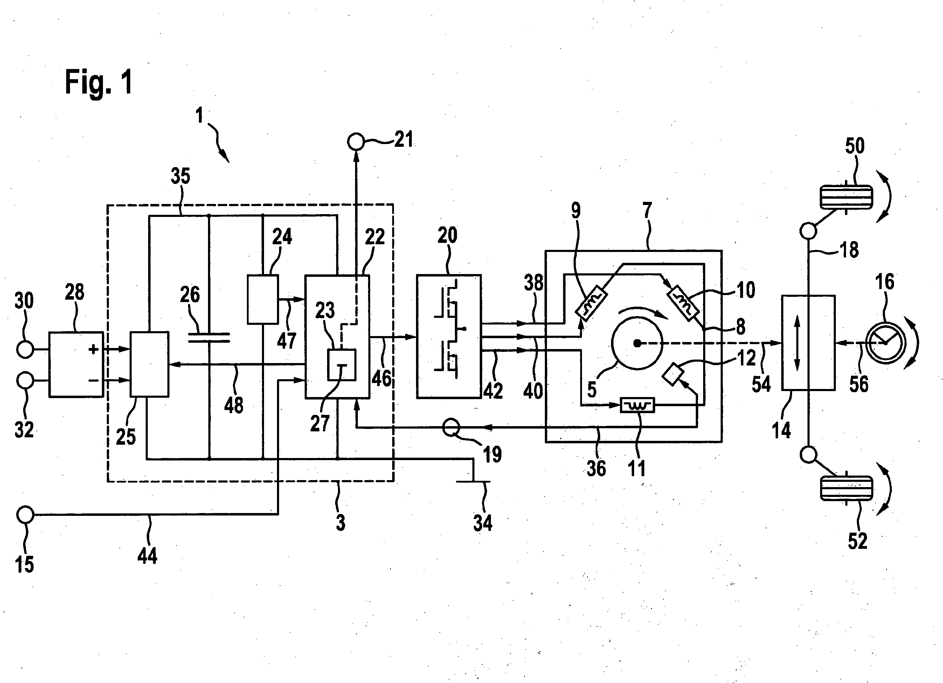

Figur 1 zeigt - schematisch - ein Ausführungsbeispiel für eine Lenkvorrichtung für ein Kraftfahrzeug, insbesondere eine Servolenkung. Die Lenkvorrichtung 1 weist einen Elektromotor mit einem Stator 7 und einem Rotor 5 auf. Der Stator 7 weist mehrere Statorspulen, in diesem Ausführungsbeispiel drei Statorspulen 9, 10 und 11 auf. Der Elektromotor weist auch einen Rotorpositionssensor 12 auf, welcher ausgebildet ist, eine Rotorposition des Rotors 5 zu erfassen. Der Rotorpositionssensor ist beispielsweise ein AMR-Sensor (AMR = Anisotrope-Magneto-Resistive) oder ein GMR-Sensor (GMS = Giant-Magneto-Resistive). Die Lenkvorrichtung 1 weist auch eine Leistungsendstufe 20 auf, welche ausgangsseitig mit dem Stator 7 und dort mit den Statorspulen verbunden ist. Eine Verbindungsleitung 38 verbindet die Leistungsendstufe 20 mit der Statorspule 10, eine Verbindungsleitung 40 verbindet die Leistungsendstufe 20 mit der Statorspule 9 und eine Verbindungsleitung 42 verbindet die Leistungsendstufe 20 mit der Statorspule 11. Die Statorspulen sind jeweils mit einem weiteren Anschluss, welcher nicht mit der Leistungsendstufe 20 verbunden ist, mit einem gemeinsamen Sternpunktanschluss 8 verbunden. Die Statorspulen sind in diesem Ausführungsbeispiel somit in Sternkonfiguration geschaltet. Denkbar ist auch eine Schaltung der Statorspulen in Dreieckskonfiguration.

Der Rotor 5 ist mittels einer mechanischen Wirkverbindung 54, in diesem Ausführungsbeispiel gestrichelt gekennzeichnet, mit einem Lenkgetriebe 14 verbunden. Das Lenkgetriebe 14 weist eine hin- und herbeweglich gelagerte Spurstange 18 auf, welche mit einem Rad 50 und einem Rad 52 des Kraftfahrzeugs gekoppelt ist. Das Lenkgetriebe 14 ist auch mittels einer mechanischen Wirkverbindung, beispielsweise einer Lenksäule mit einem Lenkrad 16 verbunden. Das Lenkgetriebe 18 ist ausgebildet, ein Drehbewegen der mechanischen Wirkverbindung 56, insbesondere der Lenksäule in ein Hin- und Herbewegen der Spurstange 18 zu überführen. Das Lenkgetriebe 14 ist auch ausgebildet, ein Drehbewegen des Rotors 5 über die mechanische Wirkverbindung 54 zu empfangen und in ein Hin- und Herbewegen der Spurstange 18 zu überführen. Die mechanische Wirkverbindung 54 ist beispielsweise durch eine Welle, oder zusätzlich durch ein Getriebe gebildet.

Die Lenkvorrichtung 1 weist auch eine Verarbeitungseinheit 22 auf. Die Verarbeitungseinheit 22 ist beispielsweise durch einen Mikrocomputer oder einen Mikrocontroller gebildet. Die Verarbeitungseinheit 22 ist ausgangsseitig über eine Verbindungsleitung 46 mit der Leistungsendstufe 20 verbunden und ist ausgebildet, die Leistungsendstufe 20 zum Bestromen der Statorspulen 9, 10 und 11 mit einem pulweitenmodulierten Bestromungsmuster derart anzusteuern, dass der Stator 7 ein magnetisches Drehfeld zum Drehbewegen des Rotors 5 erzeugen kann. Die Verarbeitungseinheit 22 ist auch mit einer Plus-Leitung 35 zum Empfangen einer Versorgungsspannung verbunden. Die Verarbeitungseinheit 22 ist auch mit einem Masseanschluss 34 zum Empfangen der Versorgungsspannung verbunden. Die Lenkvorrichtung 1 weist auch einen Spannungssensor 24 auf, welcher ausgangsseitig über eine Verbindungsleitung 47 mit der Verarbeitungseinheit 22 verbunden ist. Der Spannungssensor ist mit einem Anschluss mit der Plus-Leitung 35 und mit einem anderen Anschluss mit dem Massekontakt 34 verbunden. Der Spannungssensor 24 ist ausgebildet, die Spannung zwischen der Plus-Leitung 35 und dem Massekontakt 34 zu erfassen und ein die erfasste Spannung repräsentierendes Ausgangssignal zu erzeugen und dieses über die Verbindungsleitung 47 an die Verarbeitungseinheit 22 zu senden.

Die Lenkvorrichtung 1 weist auch einen Energiespeicher, in diesem Ausführungsbeispiel einen Kondensator 26, auf. Der Kondensator 26 ist mit einem Anschluss mit der Plus-Leitung 35 und mit einem anderen Anschluss mit dem Masseanschluss 34 verbunden. Die Lenkvorrichtung 1 weist auch einen Spannungswandler 25 auf. Der Spannungswandler 25 ist ausgangsseitig mit der Plus-Leitung 35 und mit dem Masseanschluss 34 verbunden.

Der Spannungswandler 25, der Energiespeicher 26, der Spannungssensor 24 und die Verarbeitungseinheit 22 bilden in diesem Ausführungsbeispiel einen Lenkwinkelsensor 3. Der Lenkwinkelsensor 3, insbesondere die Verarbeitungseinheit 22, weist einen Ausgang 21 für das Lenkwinkelsignal auf. Mit dem Ausgang 21 kann beispielsweise eine Fahrspurstabilisierungsvorrichtung des Kraftfahrzeugs verbunden sein und von dort den Lenkwinkel empfangen. Die Verarbeitungseinheit 22 weist auch einen Speicher 23 für einen Lenkwinkeldatensatz 27 auf, wobei der Lenkwinkeldatensatz 27 einen zuletzt ermittelten Lenkwinkel repräsentiert und ist ausgebildet, das Lenkwinkelsignal entsprechend dem Lenkwinkeldatensatz während der Zeit zu erzeugen, in der kein Lenkwinkel aus dem Rotorpositionssignal ermittelt wird. Der Speicher ist beispielsweise ein statischer Speicher, insbesondere ein Non-Volatile-Memory.

Die Verarbeitungseinheit 22 ist über einen Eingang 19 des Lenkwinkelsensors 3 und eine Verbindungsleitung 36 mit dem Rotorpositionssensor 12 verbunden und ausgebildet, das den Lenkwinkel des Lenkrads 16 in Abhängigkeit des Rotorpositionssignals zu ermitteln und ein den Lenkwinkel repräsentierende Lenkwinkelsignal zu erzeugen.

Der Spannungswandler 25 ist eingangsseitig mit einem Verpolschutz 28 verbunden. Der Verpolschutz 28 ist eingangsseitig mit einem Eingang 30 und mit einem Eingang 32 zum Empfangen einer Betriebsspannung eines Kraftfahrzeug-Bordnetzes verbunden.

Die Verarbeitungseinheit 22 ist auch eingangsseitig über eine Verbindungsleitung 44 mit einem Steuereingang 15 verbunden. Der Steuereingang 15 führt in diesem Ausführungsbeispiel die Spannung einer Klemme 15 des Kraftfahrzeug-Bordnetzes. Mittels des Steueranschlusses 15 kann somit erfasst werden, ob das Kraftfahrzeug in Betrieb ist oder ob das Kraftfahrzeug abgestellt ist. Die Verarbeitungseinheit 22 ist auch ausgangsseitig über eine Verbindungsleitung 48 mit dem Spannungswandler 25 verbunden. Der Spannungswandler 25 ist ausgebildet, in Abhängigkeit eines von der Verarbeitungseinheit 22 empfangenen Steuersignals seine Ausgangsspannung zu ändern, insbesondere wenigstens zwei zueinander verschiedene Gleichspannungen zu erzeugen und ausgangsseitig zwischen der Plus-Leitung 35 und dem Masseanschluss 34 zur Verfügung zu stellen.

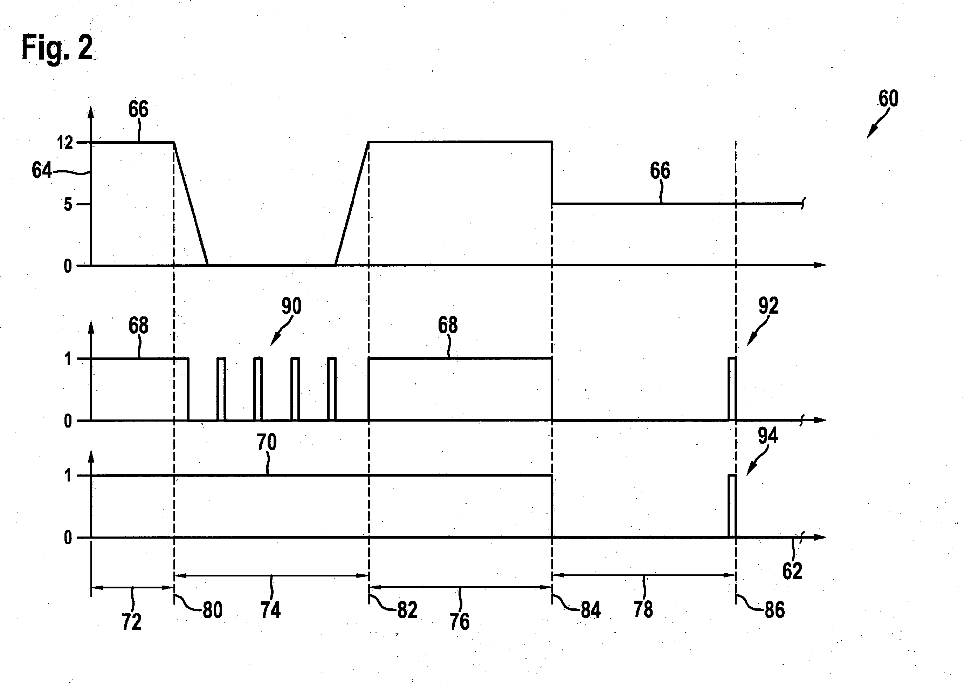

Die Funktionsweise der Lenkvorrichtung 1 wird nun im Folgenden anhand von Figur 2 beschrieben:

Figur 2 zeigt ein Diagramm 60. Das Diagramm 60 weist eine Abszisse 62 auf, welche eine Zeitachse repräsentiert. Das Diagramm 60 weist auch eine Ordinate 64 auf, welche wenigstens eine Signalamplitude repräsentiert. Dargestellt sind drei Kurven, nämlich eine Kurve 66, eine Kurve 68 und eine Kurve 70. Die Kurve 66 repräsentiert eine Spannung, welche von dem in Figur 1 dargestellten Spannungswandler 25 zum Betreiben der Verarbeitungseinheit 22 erzeugt worden ist. Die Kurve 68 repräsentiert einen Betriebszustand der Verarbeitungseinheit 22, wobei die Signalamplitude "1" bedeutet, dass die Verarbeitungseinheit 22 zum Signalverarbeiten aktiv ist, wohingegen die Signalamplitude "0" bedeutet, dass die Verarbeitungseinheit 22 in einem Bereitschaftsmodus betrieben wird. Die Verarbeitungseinheit 22 weist im Bereitschaftsmodus einen geringeren Stromverbrauch auf als im Betriebsmodus, da sie im Betriebsmodus dauernd oder länger aktiviert ist als im Bereitschaftsmodus, bezogen auf ein vorbestimmtes Zeitintervall.

Die Kurve 70 repräsentiert einen Betriebszustand des Rotorpositionssensors 12, wobei die Signalamplitude "1" bedeutet, dass der Rotorpositionssensor 12 mit einer Versorgungsspannung betrieben wird, gesteuert von der Verarbeitungseinheit 22 über die Verbindung 36. Die Signalamplitude "0" der Kurve 70 bedeutet, dass der Rotorpositionssensor 12 (gesteuert durch die Verarbeitungseinheit 22 in Figur 1 - keine Versorgungsspannung erhält.

Während eines Zeitintervalls 72 wird das Kraftfahrzeug betrieben, sodass der in Figur 1 dargestellte Steueranschluss 15 eine entsprechende Spannung führt. Die Verarbeitungseinheit 22 ist ausgebildet, in Abhängigkeit von der vom Steueranschluss 15 empfangenen Spannung im Betriebsmodus oder im Bereitschaftsmodus zu arbeiten.

Die Verarbeitungseinheit 22 arbeitet in diesem Ausführungsbeispiel während des Betriebs des Kraftfahrzeugs, also wenn die Klemme 15 eine Spannung führt, im Betriebsmodus. Während des Zeitintervalls 72 wird von dem Spannungswandler 25 eine Ausgangsspannung für den Betriebsmodus erzeugt, in diesem Ausführungsbeispiel 12 Volt.

Der Rotorpositionssensor 12 wird während des Zeitintervalls 72 von der Verarbeitungseinheit 22 kontinuierlich aktiviert, gezeigt durch die Kurve 70. Weiter ist die Verarbeitungseinheit 22 ausgebildet, während des Zeitintervalls 72 kontinuierlich ein vom Rotorpositionssensor 12 empfangenes Rotorpositionssignal zu empfangen und daraus einen Lenkwinkel des Lenkrades 16 zu ermitteln, gezeigt durch die Kurve 68.

Ein Untersetzungsverhältnis der mechanischen Wirkverbindung 54 zwischen einer Rotordrehung des Rotors 5 und einer Lenkraddrehung des Lenkrades 16 beträgt beispielsweise 1 zu 20.

Während eines Zeitintervalls 74, welches beispielsweise 10 Millisekunden beträgt, sinkt die Spannung des Kraftfahrzeug-Bordnetzes auf 0 Volt herab, sodass auch die von dem Spannungswandler 25 erzeugte Ausgangsspannung 0 Volt beträgt, gezeigt durch die Kurve 66.

Der Kondensator 26 in Figur 1 ist beispielsweise ausgebildet, die Verarbeitungseinheit 22 während des Zeitintervalls 74 mindestens mit hinreichender Versorgungsspannung zu versorgen, wobei die hinreichende Versorgungsspannung beispielsweise 5 Volt beträgt.

Der Spannungssensor 24 ist ausgebildet, das Absinken der Versorgungsspannung zu erfassen und ein entsprechendes Ausgangssignal über de Verbindungsleitung 47 an die Verarbeitungseinheit 22 zu senden. Die Verarbeitungseinheit 22 ist ausgebildet, in Abhängigkeit des von dem Spannungssensor 24 empfangenen Steuersignals gepulst zu arbeiten. Während des gepulsten Arbeitens kann die Verarbeitungseinheit 22 während einer Dauer eines Betriebspulses in einem Betriebsmodus mit reduziertem Energieverbrauch arbeiten, und während einer Pulspausendauer einer auf den Bereitschaftspuls folgenden Pulspause im Betriebsmodus mit reduziertem Energieverbrauch nicht arbeiten oder mit geringerem Stromverbrauch arbeiten als während eines Betriebspulses. Die Pulsdauer eines Betriebspulses beträgt beispielsweise weniger als 50 Mikrosekunden, oder weniger als 30 Mikrosekunden, eine Pulsabstand aufeinanderfolgender Betriebspulse im Betriebsmodus mit reduziertem Energieverbrauch beträgt in diesem Ausführungsbeispiel 2 Millisekunden. Figur 2 zeigt während des Zeitintervalls 74 fünf Betriebspulse der Kurve 68, von denen der Betriebspuls 90 beispielhaft bezeichnet ist.

Während des Zeitintervalls 74 wird der Rotorpositionssensor 12 von der Verarbeitungseinheit 22 weiter betrieben. Während des Zeitintervalls 74 wird beispielsweise das Kraftfahrzeug an einer Ampel neu gestartet, wodurch die Spannung des Kraftfahrzeug-Bordnetzes während des Zeitintervalls 74 kurzzeitig zusammenbricht. Wenn beispielsweise die Stromaufnahme der Verarbeitungseinheit 22 zwischen 300 Milliampere und 400 Milliampere beträgt, so kann während des Zeitintervalls 74 vorteilhaft Energie eingespart werden, sodass die von dem Kondensator 26 vorrätig gehaltene Ladungsmenge zum Überbrücken des Zeitintervalls 74 nicht so groß sein braucht, als wenn die Verarbeitungseinheit 22 während des Zeitintervalls 74 kontinuierlich weiterbetrieben würde.

Während des Zeitintervalls 76 wird das Kraftfahrzeug weiter gefahren. Während des Zeitintervalls 76 beträgt die Versorgungsspannung für die Verarbeitungseinheit 22 - repräsentiert durch die Kurve 66 - beispielsweise 12 Volt, erzeugt durch den Spannungswandler 25. Während des Zeitintervalls 76 wird die Verarbeitungseinheit 22 kontinuierlich betrieben, repräsentiert durch die Kurve 68. Während des Zeitintervalls 76 wird auch der Rotorpositionssensor 12 kontinuierlich betrieben, repräsentiert durch die Kurve 70.

Während eines Zeitintervalls 78 wird das Kraftfahrzeug abgestellt. Die Spannung an der Klemme 15, repräsentiert durch die Spannung des Anschlusses 15 in Figur 1, beträgt dann beispielsweise Null Volt. Die Verarbeitungseinheit 22 kann in Abhängigkeit des von dem Anschluss 15 empfangenen Spannungssignals vom Betriebsmodus in einen Bereitschaftsmodus wechseln. Die Verarbeitungseinheit 22 ist ausgebildet, im Bereitschaftsmodus während des Zeitintervalls 78 mit einer kleineren Pulsfolgefrequenz zu arbeiten, als im Zeitintervall 74. Das Zeitintervall 78 beträgt beispielsweise 10 Millisekunden.

Am Ende des Zeitintervalls 78 wird die Verarbeitungseinheit 22 zu einem Zeitpunkt 86 für die Dauer eines Bereitschaftspulses 92 aktiviert und kann während der Dauer des Bereitschaftspulses 92 sowohl den Rotorpositionssensor 12 aktivieren, als auch das von dem Rotorpositionssensor 12 erzeugte Rotorpositionssignal auswerten und zum Ermitteln des Lenkwinkels heranziehen. So kann die Verarbeitungseinheit 22 während der Dauer des Bereitschaftspulses 92 erfassen, ob das Lenkrad 16 sich bewegt hat, oder ob die Räder 50 und 52 geschwenkt worden sind und die Spurstange 18 bewegt haben.

Die Verarbeitungseinheit 22 kann in Abhängigkeit von der während der Dauer des Betriebspulses 92 erfassten Lenkbewegung vom Bereitschaftsmodus in den Betriebsmodus wechseln. Während des Zeitintervalls 78 wird von dem Spannungswandler 25 eine Gleichspannung erzeugt, welche niedriger ist als die Gleichspannung im Betriebsmodus.

Die von dem Spannungswandler erzeugte Spannung im Bereitschaftsmodus beträgt in diesem Ausführungsbeispiel 5 Volt. Die Verarbeitungseinheit 22 ist ausgebildet, in Abhängigkeit von dem von der Klemme 15 über die Verbindungsleitung 44 empfangenen Spannungssignal ein Steuersignal zum Umschalten der Ausgangsspannung des Spannungswandlers 25 zu erzeugen und dieses ausgangsseitig über die Verbindungsleitung 48 an den Spannungswandler 25 zu senden. So wird vorteilhaft sowohl im Spannungswandler selbst, als auch in der Verarbeitungseinheit 22 während eines Bereitschaftsmodus eine geringere Verlustleistung erzeugt als im Betriebsmodus.

Die Pulsdauer des Betriebspulses 92 beträgt beispielsweise weniger als 50 oder weniger als 30 Mikrosekunden. Dargestellt ist auch ein Betriebspuls 94, welcher von der Verarbeitungseinheit 22 zum Zeitpunkt 86 erzeugt wird und als Bestandteil der Kurve 70 den Rotorpositionssensor 12 für die Dauer des Betriebspulses 94, in diesem Ausführungsbeispiel 30 Mikrosekunden, aktiviert.

Ein Stromverbrauch des Rotorpositionssensors, welcher beispielsweise ein AMR-Sensor oder ein GMR-Sensor ist, beträgt während eines Betriebsmodus mit reduziertem Energieverbrauch, also wenn der Rotorpositionssensor kontinuierlich betrieben wird, weniger als 5 Milliampere oder weniger als 1 Milliampere. Vorteilhaft kann der so ausgebildete Rotorpositionssensor während des Zeitintervalls 74 kontinuierlich weiter betrieben werden, da die Stromaufnahme des Rotorpositionssensors 12 im Vergleich zur Stromaufnahme der Verarbeitungseinheit 22 gering ist. Weiter vorteilhaft kann so im Betriebsmodus mit reduziertem Energieverbrauch - beispielsweise während eines Haltens an einer Ampel - ein Lenkbewegen schneller erfasst werden als im Bereitschaftsmodus.

Dargestellt ist auch ein Zeitpunkt 80, zu dem das Zeitintervall 72 endet und das Zeitintervall 74 beginnt. Dargestellt ist auch ein Zeitpunkt 82, zu dem das Zeitintervall 74 endet und das Zeitintervall 76 beginnt. Dargestellt ist auch ein Zeitpunkt 84, zu dem das Zeitintervall 76 endet und das Zeitintervall 78 beginnt.

Denkbar ist auch eine Ausführungsform der in Figur 1 dargestellten Lenkvorrichtung 1, bei der während des Zeitintervalls 74 auch der Rotorpositionssensor 12 nur während der Dauer eines Steuerpulses, beispielsweise des Steuerpulses 90 betrieben wird.

## Patentansprüche

1. Steuereinheit (3, 28, 20) für eine Servolenkung (1), mit einem Lenkwinkelsensor (3), wobei der Lenkwinkelsensor (3) einen Eingang (19) für ein Rotorpositionssignal eines Elektromotors (5, 7, 9, 10, 11, 12) der Servolenkung (1) aufweist und ausgebildet ist, einen Lenkwinkel eines mit der Servolenkung (1) verbundenen Lenkrads (16) in Abhängigkeit des Rotorpositionssignals zu ermitteln, wobei der Lenkwinkelsensor (3) ausgebildet ist, den Lenkwinkel im Falle eines Betriebsmodus (72, 76) kontinuierlich zu ermitteln, und in einem Bereitschaftsmodus (78) in vorbestimmten Zeitabständen zu ermitteln, wobei die Steuereinheit (3, 28, 20) einen Ausgang zum Verbinden mit dem Elektromotor (5, 7, 9, 10, 11, 12) der Servolenkung (1) und einen Eingang (19) zum Empfangen des Rotorpositionsssignals aufweist, wobei die Steuereinheit (3, 28, 20) ausgebildet ist, einen Stator (7) des Elektromotors zum Erzeugen eines magnetischen Drehfeldes in Abhängigkeit des Rotorpositionssignals zu bestromen,
**dadurch gekennzeichnet, dass**
die Steuereinheit (3, 28, 20) einen Spannungswandler (25), aufweist, welcher ausgebildet ist, die Versorgungsspannung (66) zum Betreiben des Lenkwinkelsensors (3) im Betriebsmodus (72) im Vergleich zum Bereitschaftsmodus (78) anzuheben.

2. Steuereinheit nach Anspruch 1,
**dadurch gekennzeichnet, dass**
der Spannungswandler eine Ladungspumpe ist.

3. Steuereinheit nach Anspruch 1,
**dadurch gekennzeichnet, dass**
der Spannungswandler ein Hochsetzsteller ist.

4. Verfahren zum Betreiben einer elektrisch getriebenen Servolenkung (1) für ein Kraftfahrzeug, wobei die Servolenkung (1) einen Elektromotor (5, 7, 9, 19, 11, 12) mit einem Rotor (5) und eine Steuereinheit (3, 28, 20) aufweist, wobei bei dem Verfahren ein Lenkwinkelsignal in Anhängigkeit eines eine Rotorposition des Rotors (5) repräsentierenden Rotorpositionssignals erzeugt wird, wobei die Steuereinheit (3, 28, 20) einen Ausgang zum Verbinden mit dem Elektromotor (5, 7, 9, 10, 11, 12) der Servolenkung (1) und einen Eingang (19) zum Empfangen des Rotorpositionssignals aufweist, wobei die Steuereinheit (3, 28, 20) ausgebildet ist, einen Stator (7) des Elektromotors (5, 7, 9, 19, 11, 12) zum Erzeugen eines magnetischen Drehfeldes in Abhängigkeit des Rotorpositionssignals zu bestromen, wobei das Lenkwinkelsignal in einem Betriebsmodus kontinuierlich erzeugt wird, und in einem Bereitschaftsmodus gepulst während der Pulsdauer wenigstens eines Bereitschaftspulses einer zeitlichen Folge von Bereitschaftspulsen erzeugt wird,
**dadurch gekennzeichnet, dass**
bei dem Verfahren die Versorgungsspannung (66) zum Betreiben des Lenkwinkelsensors (3) im Betriebsmodus (72, 76) im Vergleich zum Bereitschaftsmodus (78) angehoben wird.

5. Verfahren nach Anspruch 4,
bei dem eine Versorgungsspannung (66) eines das Lenkwinkelsignal erzeugenden Lenkwinkelsensors (3) erfasst wird und in Abhängigkeit der Versorgungsspannung (66), insbesondere bei einem Absinken der Versorgungsspannung (66, 74) vom Betriebsmodus (72, 76) in einen Betriebsmodus (74) gewechselt wird, bei dem das Lenkwinkelsignal gepulst während der Pulsdauer wenigstens eines Betriebspulses einer zeitlichen Folge von Betriebspulsen erzeugt wird, wobei eine Pulsfolgefrequenz der Betriebspulse größer ist als eine Pulsfolgefrequenz der Bereitschaftspulse.

6. Verfahren nach Anspruch 4 oder 5,
bei dem in Abhängigkeit eines im Bereitschaftsmodus (78) erfassen Rotorbewegens vom Bereitschaftsmodus (78) in den Betriebsmodus (72, 76) gewechselt wird.

## Claims

1. Control unit (3, 28, 20) for a power steering system (1), with a steering angle sensor (3), wherein the steering angle sensor (3) has an input (19) for a rotor position signal of an electric motor (5, 7, 9, 10, 11, 12) of the power steering system (1) and is designed to determine a steering angle of a steering wheel (16), connected to the power steering system (1), as a function of the rotor position signal, wherein the steering angle sensor (3) is designed to determine the steering angle continuously in the case of an operating mode (72, 76), and to determine said steering angle at predetermined time intervals in a standby mode (78), wherein the control unit (3, 28, 20) has an output for connecting to the electric motor (5, 7, 9, 10, 11, 12) of the power steering system (1) and an input (19) for receiving the rotor position signal, wherein the control unit (3, 28, 20) is designed to energize a stator (7) of the electric motor in order to generate a magnetic rotating field as a function of the rotor position signal,
**characterized in that**
the control unit (3, 28, 20) has a voltage transformer (25) which is designed to raise the supply voltage (66) for operating the steering angle sensor (3) in the operating mode (72), in comparison with the standby mode (78).

2. Control unit according to Claim 1,
**characterized in that**
the voltage transformer is a charge pump.

3. Control unit according to Claim 1,
**characterized in that**
the voltage transformer is a step-up converter.

4. Method for operating an electrically driven power steering system (1) for a motor vehicle, wherein the power steering system (1) has an electric motor (5, 7, 9, 10, 11, 12) with a rotor (5), and a control unit (3, 28, 20), wherein in the method a steering angle signal is generated as a function of a rotor position signal representing a rotor position of the rotor (5), wherein the control unit (3, 28, 20) has an output for connecting the electric motor (5, 7, 9, 10, 11, 12) of the power steering system (1) and an input (19) for receiving the rotor position signal, wherein the control unit (3, 28, 20) is designed to energize a stator (7) of the electric motor (5, 7, 9, 10, 11, 12) in order to generate a magnetic rotating field as a function of the rotor position signal, wherein the steering angle signal is generated continuously in an operating mode, and in a standby mode said steering angle signal is generated in a pulsed fashion during the pulse length of at least one standby pulse of a time sequence of standby pulses,
**characterized in that**
in the method the supply voltage (66) for operating the steering angle sensor (3) is raised in the operating mode (72, 76) in comparison with the standby mode (78).

5. Method according to Claim 4,
in which a supply voltage (66) of a steering angle sensor (3) which generates the steering angle signal is sensed, and as a function of the supply voltage (66), in particular when the supply voltage (66, 74) drops, there is a change over from the operating mode (72, 76) into an operating mode (74) in which the steering angle signal is generated in a pulsed fashion during the pulse length of at least one operating pulse of a time sequence of operating pulses, wherein a pulse sequence frequency of the operating pulses is higher than a pulse sequence frequency of the standby pulses.

6. Method according to Claim 4 or 5,
in which there is a changeover from the standby mode (78) into the operating mode (72, 76) as a function of a rotary movement sensed in the standby mode (78).

## Revendications

1. Unité de commande (3, 28, 20) pour une direction assistée (1), comprenant un capteur d'angle de direction (3), le capteur d'angle de direction (3) présentant une entrée (19) pour un signal de position de rotor d'un moteur électrique (5, 7, 9, 10, 11, 12) de la direction assistée (1) et étant réalisé pour déterminer un angle de direction d'un volant (16) raccordé à la direction assistée (1) en fonction du signal de position de rotor, le capteur d'angle de direction (3) étant réalisé pour déterminer en continu l'angle de direction dans le cas d'un mode de fonctionnement (72, 76), et pour effectuer la détermination pendant des intervalles de temps prédéterminés dans un mode d'attente (78), l'unité de commande (3, 28, 20) présentant une sortie pour le raccordement au moteur électrique (5, 7, 9, 10, 11, 12) de la direction assistée (1) et une entrée (19) pour recevoir le signal de position de rotor, l'unité de commande (3, 28, 20) étant réalisée pour alimenter en courant un stator (7) du moteur électrique pour générer un champ magnétique tournant en fonction du signal de position de rotor,
**caractérisée en ce que**
l'unité de commande (3, 28, 20) présente un transformateur de tension (25) qui est réalisé pour augmenter la tension d'alimentation (66) pour le fonctionnement du capteur d'angle de direction (3) en mode de fonctionnement (72) par rapport au mode d'attente (78).

2. Unité de commande selon la revendication 1, **caractérisée en ce que**
le transformateur de tension est une pompe de charge.

3. Unité de commande selon la revendication 1, **caractérisée en ce que**
le transformateur de tension est un transformateur élévateur.

4. Procédé pour faire fonctionner une direction assistée (1) à commande électrique pour un véhicule automobile, la direction assistée (1) présentant un moteur électrique (5, 7, 9, 10, 11, 12) avec un rotor (5) et une unité de commande (3, 28, 20), où, dans le procédé, un signal d'angle de direction est généré en fonction d'un signal de position de rotor représentant une position de rotor du rotor (5), l'unité de commande (3, 28, 20) présentant une sortie pour le raccordement au moteur électrique (5, 7, 9, 10, 11, 12) de la direction assistée (1) et une entrée (19) pour recevoir le signal de position de rotor, l'unité de commande (3, 28, 20) étant réalisée pour alimenter en courant un stator (7) du moteur électrique (5, 7, 9, 10, 11, 12) pour générer un champ magnétique tournant en fonction du signal de position de rotor, le signal d'angle de direction étant généré en continu dans un mode de fonctionnement, et dans un mode d'attente, étant généré de manière pulsée pendant la durée d'impulsion d'au moins une impulsion d'attente d'une séquence temporelle d'impulsions d'attente, **caractérisé en ce que**
dans le procédé, la tension d'alimentation (66) pour le fonctionnement du capteur d'angle de direction (3) en mode de fonctionnement (72, 76) est augmentée par rapport au mode d'attente (78).

5. Procédé selon la revendication 4,
dans lequel une tension d'alimentation (66) d'un capteur d'angle de direction (3) générant le signal d'angle de direction est détectée et, en fonction de la tension d'alimentation (66), en particulier dans le cas d'une chute de la tension d'alimentation (66, 74), on passe du mode de fonctionnement (72, 76) dans un mode de fonctionnement (74) dans lequel le signal d'angle de direction est généré de manière pulsée pendant la durée d'impulsion d'au moins une impulsion de fonctionnement d'une séquence temporelle d'impulsions de fonctionnement, une fréquence de trains d'impulsions des impulsions de fonctionnement étant supérieure à une fréquence de trains d'impulsions des impulsions d'attente.

6. Procédé selon la revendication 4 ou 5,
dans lequel, en fonction d'un déplacement du rotor détecté en mode d'attente (78), on passe du mode d'attente (78) au mode de fonctionnement (72, 76).
